# EUROPÄISCHE PATENTSCHRIFT

(11) **EP 0 582 971 B1**
(45) Veröffentlichungstag und Bekanntmachung des Hinweises auf die Patenterteilung: **19.11.1997**
(21) Anmeldenummer: 93112553.8
(22) Anmeldetag: 05.08.1993
(51) Int. Cl.: B01D 53/94

(54) **Verfahren zur katalytischen Autoabgasreinigung mit verbessertem Kaltstartverhalten**
Process for the catalytic purification of automobile exhaust gases with improved cold start behaviour
Procédé d'épuration catalytique des effluents gazeux des automobiles avec un comportement amélioré de démarrage à froid

(30) Priorität: 10.08.1992 DE 4226394
(43) Veröffentlichungstag der Anmeldung: 16.02.1994
(73) Patentinhaber: Degussa Aktiengesellschaft, 60311 Frankfurt (DE)
(72) Erfinder: Lindner, Dieter, Dr., D-63457 Hanau (DE); Lox, Egbert, Dr., D-63457 Hanau (DE); Engler, Bernd, Dr., D-63457 Hanau (DE); Ostgathe, Klaus, D-65795 Hattersheim (DE)

(56) Entgegenhaltungen:
- EP-A- 0 424 966
- EP-A- 0 441 173
- DE-A- 4 008 789
- US-A- 5 078 979

## Beschreibung

Die Erfindung betrifft ein verfahren zur katalytischen Autoabgasreinigung mit verbesserter Kohlenwasserstoffunterdrückung während der Kaltstartphase unter Verwendung eines an sich bekannten Drei-Wege-Katalysators und eines im Abgasstrom vor diesem Katalysator angeordneten Kohlenwasserstoffadsorbers, der nach dem Kaltstart, solange der Drei-Wege-Katalysator noch nicht seine volle Betriebstemperatur und Leistungsfähigkeit erreicht hat, im Abgas enthaltene Kohlenwasserstoffe adsorbiert und sie erst nach Erwärmung wieder an das Abgas desorbiert, so daß die desorbierten Kohlenwasserstoffe von dem nun schon aktiveren Drei-Wege-Katalysator in unschädliche Komponenten konvertiert werden können.

Die zukünftigen Grenzwerte für die Schadstoffemissionen von Kraftfahrzeugen sind in den Vorschriften TLEV/1994 und LEV/1997 (LEV = Low Emission Vehicle) festgeschrieben. Sie stellen insbesondere für Kohlenwasserstoffe eine wesentliche Verschärfung der Grenzwerte dar. Da heutige Abgaskatalysatoren im betriebswarmen Zustand einen hohen Stand der Schadstoffkonversion erreicht haben, ist die Einhaltung der zukünftigen Grenzwerte nur durch eine Verbesserung der Schadstoffkonversion während der Kaltstartphase möglich. Denn während der Kaltstartphase der gesetzlich festgelegten Testzyklen (z.B. US FTP 75) wird ein Großteil der insgesamt freigesetzten Schadstoffe emittiert, da die Katalysatoren in dieser Phase noch nicht die für die Umsetzung der Kohlenwasserstoffe notwendige Betriebstemperatur von 300 bis 400 °C erreicht haben.

Zur Verringerung der Schadstoffemissionen während der Kaltstartphase wurden schon Abgassysteme bestehend aus einem Kohlenwasserstoffadsorber und einem nachgeschalteten Katalysator vorgeschlagen. Der Kohlenwasserstoffadsorber hat dabei die Aufgabe, während der Kaltstartphase bei noch relativ niedrigen Temperaturen die im Abgas enthaltenen Kohlenwasserstoffe zu adsorbieren. Erst bei stärkerer Erwärmung des Adsorbers werden die Kohlenwasserstoffe wieder desorbiert und gelangen mit dem jetzt heißeren Abgas zu dem nun schon fast auf Betriebstemperatur befindlichen Katalysator und werden hier effektiv in unschädliches Wasser und Kohlendioxid konvertiert. Eine wesentliche Forderung an den Adsorber ist dabei die Fähigkeit, Kohlenwasserstoffe bevorzugt vor dem im Abgas ebenfalls reichlich vorhandenen Wasserdampf zu adsorbieren.

Nachteilig bei dieser beschriebenen Lösung ist die schon bei Temperaturen um 250 °C einsetzende Desorption der Kohlenwasserstoffe, so daß eine optimale Konversion am nachfolgenden Katalysator noch nicht stattfinden kann. Außerdem besteht die Gefahr einer thermischen Zerstörung des Adsorbers, da er motornah in das Abgassystem eingebaut werden muß und deshalb bei Dauerbetrieb Temperaturbelastungen bis zu 1000 °C ausgesetzt ist. Zur Behebung dieses Mangels gibt es eine große Zahl von Vorschlägen in der Patentliteratur, so zum Beispiel in der deutschen Offenlegungsschrift DE 40 08 789, in der europäischen Patentanmeldung EP 0 460 542, sowie in der US-Patentschrift US 5,051,244. Diese Dokumente gehen ebenfalls von der Kombination eines Kohlenwasserstoffadsorbers und eines Katalysators aus, schlagen aber zur Behebung der beschriebenen Nachteile aufwendigen Schaltungen für das Abgas vor.

So schlägt die US 5,051,244 vor, einen Zeolithadsorber vor den eigentlichen Katalysator zu schalten, der im kalten Zustand die Schadstoffe im Abgas, insbesondere Kohlenwasserstoffe, adsorbiert und sie mit zunehmender Erwärmung des Abgassystems wieder abgibt. Zum Schutz des Adsorbers vor Zerstörung durch Überhitzung bei Dauerbetrieb des Motors ist eine zuschaltbare Kurzschlußleitung vom Motor direkt zum Katalysator vorgesehen.

Während der ersten 200 bis 300 Sekunden nach dem Start wird das Abgas voll über den Adsorber und den Katalysator geleitet. In dieser Betriebsphase werden die Kohlenwasserstoffe vom Adsorber aufgenommen. Adsorber und Katalysator erwärmen sich zunehmend durch das heiße Abgas. Der Adsorber wird kurzgeschlossen, wenn infolge der Temperaturerhöhung die Desorption die Adsorption zu übertreffen beginnt. Das Abgas strömt nun direkt über den Katalysator. Bei Erreichen der Betriebstemperatur wird ein Teil des heißen Abgases bis zur völligen Desorption der Schadstoffe über den Adsorber geleitet, die nun vom Katalysator mit gutem Wirkungsgrad umgesetzt werden können. Nach erfolgter Desorption wird der Adsorber wieder kurzgeschlossen, um ihn vor Zerstörung durch thermische Überlastung zu schützen.

Von der US 5,051,244 wird als Adsorber ein Y-Zeolith mit einem Si/Al-Atomverhältnis von wenigstens 2,4 vorgeschlagen. Der Zeolithadsorber kann feinverteilte katalytisch aktive Metalle wie Platin, Palladium, Rhodium, Ruthenium und Mischungen davon enthalten.

Die US 5,078,979 beschreibt ein Abgasreinigungssystem aus einem Adsorber und einem nachgeschalteten Katalysator. Für den Adsorber werden selektive Adsorbermaterialien vorgeschlagen, die Kohlenwasserstoffe bevorzugt vor Wasser adsorbieren. Dadurch kann der Adsorber kleiner als bei Verwendung von nicht selektivem Adsorbermaterial ausgeführt werden. Dies hat eine schnellere Aufheizung des nachgeschalteten Katalysators zur Folge.

Diese aus dem Stand der Technik bekannten Lösungen sind technisch sehr aufwendig, teuer und störanfällig. Es ist Aufgabe der vorliegenden Erfindung ein Verfahren anzugeben mit dem diese aus dem Stand der Technik bekannten Nachteile bei sehr guter Kohlenwasserstoffunterdrückung während der Kaltstartphase behoben werden.

Die Aufgabe wird durch ein Verfahren zur katalytischen Autoabgasreinigung mit verbesserter Kohlenwasserstoffunterdrückung während der Kaltstartphase nach dem Oberbegriff von Anspruch 1 gelöst. Das Verfahren ist dadurch gekennzeichnet, daß die spezifische Wärmekapazität des Dreiweg-Katalysators einen Wert zwischen 0,29 J/Kcm³ und 0,57 J/Kcm³ aufweist und die spezifische Wärmekapazität des Kohlenwasserstoffadsorbers um den Faktor 1,1 bis 3,0 größer ist als die spezifische Wärmekapazität des Katalysators.

Unter der spezifischen Wärmekapazität wird im Rahmen dieser Erfindung nicht die spezifische Wärme von Stoffen verstanden, sondern die auf die Volumeneinheit bezogene Wärmekapazität des Adsorber- bzw. Katalysatorkörpers. Adsorber oder Katalysatoren können in Form von losen Schüttungen aus Granulaten, Extrudaten oder Pellets oder in Form von monolithischen Schaumkörpern oder Wabenkörpern vorliegen. Zur Berechnung der spezifischen Wärmekapazität im Sinne dieser Erfindung wird die Wärmekapazität dieser Schüttung oder monolithischen Körper auf das geometrische Volumen dieser Schüttung und Körper unter Einschluß aller Hohlräume und Poren bezogen. Es handelt sich also bei der spezifischen Wärmekapazität nicht um eine Stoffgröße im physikalischen Sinne. Sie ist vielmehr abhängig von der makroskopischen Form sowie dem mikroskopischen Aufbau von Adsorber oder Katalysator. Möglichkeiten zur Beeinflussung der spezifischen Wärmekapazität bestehen daher für den Fachmann in der Auswahl des Materials für Adsorber und Katalysator sowie in der Verarbeitung und geometrischen Formgebung und lassen ihm daher einen weiten Spielraum für die Ausgestaltung dieser Erfindung.

Beispielhaft seien hier die spezifischen Wärmen einiger Stoffe erwähnt, die als Ausgangsmaterialien für die Fertigung von Tragkörpern für Adsorber- und Katalysatorbeschichtungen in Frage kommen:

| Material | Dichte [g·cm⁻³] | spezifische Wärme [J·g⁻¹·K⁻¹] |
|---|---|---|
| alfa-Aluminiumoxid | 3,97 | 1,088 |
| Mullit | 2,80 | 1,046 |
| Zirkonoxid,stabil. | 5,70 | 0,400 |
| Edelstahl,hochleg. (20Cr;7Ni) | 7,86 | 0,544 |

Wie diese Tabelle zeigt, überstreichen die spezifischen Wärmen der geeigneten Materialien einen Bereich von 0,400 bis 1,088 J·g⁻¹·K⁻¹. Unter Berücksichtigung der Dichte der jeweiligen Materialien verbleibt dem Fachmann allein durch die Materialwahl ein Gestaltungspielraum bei der spezifischen Wärmekapazität von ca. 1:2. Hinzu kommen weitere Möglichkeiten zur Ausweitung dieses Bereiches durch entsprechende geometrische Formgebung (unterschiedliche Wandstärken) und Einbau von Porositäten.

Mit zunehmender spezifischer Wärmekapazität des Kohlenwasserstoffadsorbers verglichen mit der des nachgeschalteten Drei-Wege-Katalysators verzögert sich die Aufheizung gegenüber der des Katalysators. Dadurch bleibt der Adsorber länger adsorptionsfähig und gibt die adsorbierten Kohlenwasserstoffe erst verzögert wieder ab. Wird das Verhältnis der spezifischen Wärmekapazität des Kohlenwasserstoffadsorbers zu der des Drei-Wege-Katalysators im Bereich zwischen 1.1-3.0 : 1 gewählt, bevorzugt zwischen 1.5-3.0 : 1, so führt die verzögerte Aufheizung des Adsorbers dazu, daß die Desorption der Kohlenwasserstoffe erst einsetzt, wenn der nachgeschaltete Katalysator schon nahezu seine volle Wirksamkeit bei der Konversion von Kohlenwasserstoffen erreicht hat. Weist der Kohlenwasserstoffadsorber nämlich zum Beispiel die doppelte spezifische Wärmekapazität wie der nachgeschaltete Katalysator auf, so erwärmt sich der Adsorber unter der Annahme eines etwa gleichen Energieeintrags nur halb so schnell wie der Katalysator.

Eine besonders günstige Ausführungsform des erfindungsgemäßen Verfahrens ist dadurch gekennzeichnet, daß es sich beim Kohlenwasserstoffadsorber und Drei-Wege-Katalysator um monolithische Tragkörper in Wabenform handelt, deren Wärmekapazitäten sich gemäß Anspruch 2 verhalten und auf denen Kohlenwasserstoffe adsorbierende beziehungsweise katalytisch aktive Beschichtungen in an sich bekannter Weise aufgebracht sind.

Bevorzugt verwendet man als Kohlenwasserstoffadsorber einen temperaturstabilen dealuminierten Y-Zeolithen mit einem Si/Al-Verhältnis größer als 50, vorzugsweise größer als 100, der in einer Menge von 100 bis 400 g pro Liter Wabenkörpervolumen aufgebracht wird. Ein solcher Y-Zeolith ist sehr temperaturstabil und verliert seine Adsorptionseigenschaften auch nicht nach mehrmaliger Aufheizung auf cirka 1000 °C, der zu erwartenden Betriebstemperatur im motornahen Bereich. Zudem weist ein solcher Adsorber ein selektives Adsorptionsverhalten für Kohlenwasserstoffe auf, das heißt er adsorbiert bevorzugt Kohlenwasserstoffe vor dem auch im Abgas enthaltenen Wasserdampf.

Die Emission von Kohlenwasserstoffen während der Kaltstartphase kann weiter vermindert werden, wenn der Adsorber schon selbst katalytische Eigenschaften aufweist. Dies kann dadurch erreicht werden, daß die Beschichtung aus Kohlenwasserstoffadsorber noch zusätzliche Anteile einer üblichen katalytischen aktiven Beschichtung aufweist. Solche katalytisch aktiven Beschichtungen enthalten gewöhnlich hochoberflächige Trägeroxide wie zum Beispiel gitterstabilisiertes oder reines Aluminiumoxid der Übergangsreihe, dotiertes oder reines Ceroxid und dotiertes oder reines Zirkonoxid. Auf diesen Trägeroxiden sind katalytisch aktive Metallkomponenten aus der Gruppe der Platinmetalle abgeschieden. Das Gewichtsverhältnis zwischen Zeolithadsorber und Trägeroxiden in der Beschichtung sollte von 4:1 bis 1:2 betragen. Dabei sollten die katalytisch aktiven Komponenten aus der Gruppe der Platinmetalle fein verteilt auf allen oxidischen Anteilen der Beschichtung mit Ausnahme des Zeolithadsorbers vorliegen. Als Platinmetalle kommen bevorzugt Platin, Palladium und Rhodium zum Einsatz.

Eine solche Beschichtung kann dadurch erhalten werden, daß zunächst eine Beschichtungsdispersion aus Zeolith, Aluminiumoxid, Ceroxid und Zirkonoxid hergestellt wird, zu der die katalytisch aktiven Metallkomponenten in Form ihrer Vorstufen wie zum Beispiel Nitrate oder Chloride zugesetzt werden. Diese Vorstufen lagern sich bekanntermaßen bevorzugt auf Aluminiumoxid, Ceroxid und Zirkonoxid nicht jedoch auf Zeolith ab. Mit dieser Beschichtungsdispersion wird der monolithische Träger nach an sich bekannten Verfahren beschichtet, getrocknet, kalziniert und gegebenenfalls in einem wasserstoffhaltigen Gasstrom bei Temperaturen um 600 °C aktiviert.

Eine noch bessere Trennung der Edelmetallkomponenten vom Zeolithen erhält man, wenn eine Mischung aus Aluminiumoxid, Ceroxid und Zirkonoxid zunächst in einem separaten Imprägnierschritt mit den Edelmetallen vorbelegt wird und die endgültige Beschichtungsdispersion aus Zeolith und den anderen Oxidkomponenten erst nach Fixierung der Edelmetalle auf diesen Komponenten durch Kalzinierung hergestellt wird.

Eine besonders bevorzugte Ausführungsform der Erfindung sieht eine Beschichtung des Tragkörpers mit zwei unterschiedlichen Schichten vor. Bei der ersten Schicht handelt es sich um eine Katalysatorbeschichtung aus hochoberflächigen Trägeroxiden und katalytisch aktiven Metallkomponenten aus der Gruppe der Platinmetalle. Auf dieser Beschichtung ist dann die eigentliche Kohlenwasserstoffadsorber-Beschichtung aufgebracht. Die dabei anzuwendenden Beschichtungsmengen liegen für beide Schichten im Bereich von 50 bis 200 g pro Liter Tragkörpervolumen.

Bevorzugt werden als Tragkörper für Kohlenwasserstoffadsorber und Drei-Wege-Katalysator Keramikmonolithe aus Cordierit oder Mullit verwendet. Weitere geeignete Materialien für die Tragkörper sind Zirkon-Mullit, Alfa-Aluminiumoxid, Sillimanit, Magnesiumsilikate, Petalit, Spodumen, Aluminiumsilikate usw., oder auch Edelstahl. Die spezifischen Wärmekapazitäten dieser Tragkörper müssen sich gemäß den Vorgaben von Anspruch 2 verhalten. Die folgende Tabelle gibt die Daten einiger kommerziell erhältlicher Keramikmonolithe wieder. Es handelt sich um Wabenkörper mit einem Durchmesser von jeweils 93 mm und einer Länge von 152,4 mm mit verschiedenen Wandstärken und jeweils einem Zellenabstand von ca. 1,28 mm.

| Monolith | Wandstärke [mm] | spez. Wärme [J·g⁻¹·K⁻¹] | Gewicht [g] | Wärmekapaz. [J·K⁻¹] |
|---|---|---|---|---|
| A | 0,16 | 0,850 | 351 | 299 |
| B | 0,16 | 0,845 | 440 | 372 |
| C | 0,16 | 0,843 | 471 | 397 |
| D | 0,14 | 0,862 | 427 | 368 |
| E | 0,16 | 0,836 | 448 | 375 |
| F | 0,19 | 0,824 | 581 | 479 |
| G | 0,25 | 0,836 | 706 | 590 |

Eine weitere Ausführungsform des erfindungsgemäßen Verfahrens erhält man, wenn der Tragkörper für den Kohlenwasserstoffadsorber ein Keramikmonolith und der Tragkörper für den Katalysator ein heizbarer Metallmonolith ist. Die Wärmekapazitäten von Kohlenwasserstoffadsorber und Drei-Wege-Katalysator müssen wieder den Bedingungen von Anspruch 2 genügen. Die Kohlenwasserstoffemissionen während der Kaltstartphase lassen sich auf diese Weise noch weiter vermindern, da hierbei die verzögerte Desorption der Kohlenwasserstoffe mit einer beschleunigten Aufheizung des Katalysators kombiniert wird.

Die Erfindung wird nun an Hand einiger Beispiele näher erläutert.

### Beispiel 1:

Es wurden die Adsorptions- und Desorptionseigenschaften einer Adsorberbeschichtung auf verschiedenen Keramikwabenkörpern aus Cordierit miteinander verglichen. Die Adsorberbeschichtung bestand aus dealuminiertem Y-Zeolith mit einem Si/Al-Verhältnis von über 100. Diese Beschichtung wurde jeweils in einer Menge von 100 g/l Wabenkörper aufgebracht. Die Adsorber hatten eine Zelldichte von 68 Zellen/cm² einen Durchmesser von 25,4 mm und eine Länge von 152,4 mm. Es wurden insgesamt drei verschiedene Keramikwabenkörper (A, C, G nach obiger Tabelle) mit den Massenverhältnissen 1:1.34:1.98 und dementsprechenden Verhältnissen ihrer spezifischen Wärmekapazitäten verwendet.

Die Testung erfolgte im Modellgas unter folgenden Bedingungen:
- -Gasgemisch: vor Adsorber 200 ppm Toluol, Rest N₂
- -Temperatur: Aufheizung des Gasgemisches von 50 auf 200°C mit 10 K/min
- -Gasgeschwindigkeit: 1550 Nl/h
- -Meßgrößen: Temperatur vor und nach Adsorber; Toluolkonzentration nach Adsorber

Die nachfolgende Tabelle zeigt die wesentlichen Resultate. Sie enthält die vom jeweiligen Adsorber bei den angegebenen Temperaturen freigesetzten Toluolmengen in Prozent bezogen auf die vom leichtesten Adsorber bei diesen Temperaturen desorbierten Toluolmengen.

| Monolith | Temperatur vor Adsorber | | | |
|---|---|---|---|---|
| | 120°C | 150°C | 180°C | 200°C |
| A | 100% | 100% | 100% | 100% |
| C | 53% | 95% | 100% | 100% |
| G | 53% | 83% | 91% | 92% |

Während der Testung wird bis 120°C beispielsweise hinter den Monolithen C und G insgesamt lediglich 53% der Toluolmenge gefunden, die vom Monolithen A insgesamt bis zu dieser Temperatur freigesetzt wird. Diese verzögerte Freisetzung führt in Verbindung mit einem nachgeschalteten Katalysator mit kleinerer spezifischer Wärmekapazität zu einer wesentlich verbesserten Umsetzung der Kohlenwasserstoffe in der Kaltstartphase.

### Beispiel 2:

In einem zweiten Versuch wurde das Aufheizverhalten der Monolithe C und G vermessen. Dazu wurden sie von 400 °C heißer Luft unter für Autoabgaskatalysatoren typischen Strömungsverhältnissen durchströmt. Der zeitliche Temperaturanstieg auf der Austrittsstirnfläche der Monolithe wurde mit Thermoelementen vermessen. Untenstehende Tabelle zeigt die Meßergebnisse. In dieser Tabelle ist die zum Erreichen einer bestimmten Temperatur benötigte Zeit in Sekunden angegeben. Das langsamere Aufheizverhalten des schwereren Monolithen G ist deutlich zu erkennen und führt zu einer ausreichenden Verzögerung seines Desorptionsverhaltens bei Kombination mit einem nachgeschalteten Katalysator auf einem Keramikmonolithen vom Typ A.

| Monolith | Temperatur nach Adsorber | | | |
|---|---|---|---|---|
| | 100°C | 150°C | 200°C | 250°C |
| C | 18s | 25s | 32s | 40s |
| G | 25s | 34s | 42s | 55s |

## Patentansprüche

1. Verfahren zur katalytischen Autoabgasreinigung mit verbesserter Kohlenwasserstoffunterdrückung während der Kaltstartphase unter Verwendung eines an sich bekannten Dreiweg-Katalysators und eines im Abgasstrom vor diesem Katalysator angeordneten Kohlenwasserstoffadsorbers, wobei Katalysator und Adsorber eine auf das Volumen bezogene spezifische Wärmekapazität aufweisen,
**dadurch gekennzeichnet,**
daß die spezifische Wärmekapazität des Dreiweg-Katalysators einen Wert zwischen 0,29 J/Kcm³ und 0,57 J/Kcm³ aufweist und die spezifische Wärmekapazität des Kohlenwasserstoffadsorbers um den Faktor 1,1 bis 3,0 größer ist als die spezifische Wärmekapazität des Katalysators.

2. Verfahren nach Anspruch 1,
**dadurch gekennzeichnet,**
daß es sich beim Kohlenwasserstoffadsorber und Dreiweg-Katalysator um monolithische Tragkörper in Wabenform handelt, auf denen Kohlenwasserstoffe adsorbierende beziehungsweise katalytisch aktive Beschichtungen in an sich bekannter Weise aufgebracht sind.

3. Verfahren nach Anspruch 2,
**dadurch gekennzeichnet,**
daß es sich bei dem Kohlenwasserstoffadsorber um einen temperaturstabilen dealuminierten Y-Zeolithen mit einem Si/Al-Verhältnis größer als 50, vorzugsweise größer als 100, handelt, der in einer Menge von 100 bis 400 g pro Liter Wabenkörpervolumen aufgebracht ist.

4. Verfahren nach den Ansprüchen 2 und 3,
**dadurch gekennzeichnet,**
daß die Beschichtung aus Kohlenwasserstoffadsorber noch zusätzliche Anteile einer üblichen katalytischen aktiven Beschichtung aus hochoberflächigen Trägeroxiden und darauf aufgebrachten katalytisch aktiven Metallkomponenten aus der Gruppe der Platinmetalle aufweist, enthaltend gitterstabilisiertes oder reines Aluminiumoxid der Übergangsreihe, dotiertes oder reines Ceroxid und dotiertes oder reines Zirkonoxid und daß Zeolithadsorber und hochoberflächige Trägeroxide in der Beschichtung in einem Gewichtsverhältnis von 4 : 1 bis 1 : 2 zueinander stehen und die katalytisch aktiven Metallkomponenten fein verteilt auf den Trägeroxiden vorliegen, jedoch nicht auf dem Zeolithadsorber.

5. Verfahren nach den Ansprüchen 2 und 3,
**dadurch gekennzeichnet,**
daß der monolithische Trägerkörper für den Kohlenwasserstoffadsorber eine katalytisch aktive Beschichtung aus hochoberflächigen Trägeroxiden und darauf aufgebrachten katalytisch aktiven Metallkomponenten aus der Gruppe der Platinmetalle aufweist und daß auf dieser Beschichtung eine weitere Beschichtung aus einem Kohlenwasserstoffadsorber nach Anspruch 2 aufgebracht ist, wobei für beide Beschichtungen eine Beschichtungsmenge von 50 bis 200 g pro Liter Trägerkörpervolumen angewendet wird.

6. Verfahren nach einem der Ansprüche 2 bis 5,
**dadurch gekennzeichnet,**
daß es sich bei den monolithischen Tragkörpern des Kohlenwasserstoffadsorbers und des Dreiweg-Katalysators um Keramikmonolithe aus Cordierit oder Mullit handelt.

7. Verfahren nach einem der Ansprüche 2 bis 5,
**dadurch gekennzeichnet,**
daß es sich bei dem monolithischen Tragkörper des Kohlenwasserstoffadsorbers um einen Keramikmonolithen und bei dem Tragkörper des Dreiweg-Katalysators um einen heizbaren Metallmonolithen handelt.

## Claims

1. Process for catalytic car exhaust gas purification with improved hydrocarbon suppression during the cold-start phase by using a three-way catalytic converter known per se and a hydrocarbon adsorber arranged in the exhaust gas stream upstream of this catalytic converter, wherein catalytic converter and adsorber have a specific heat capacity with reference to the volume,
characterised in that
the specific heat capacity of the three-way catalytic converter has a value between 0.29 J/kcm³ and 0.57 J/kcm³ and the specific heat capacity of the hydrocarbon adsorber is greater than the specific heat capacity of the catalytic converter by a factor of 1.1 to 3.0.

2. Process according to Claim 1,
characterised in that
the hydrocarbon adsorber and three-way catalytic converter are monolithic supports with a honeycomb structure onto which are applied hydrocarbon adsorbing and catalytically active coatings respectively in a manner known per se.

3. Process according to Claim 2,
characterised in that
the hydrocarbon adsorber is a thermally stable dealuminised Y-zeolite with a Si/Al ratio greater than 50, preferably greater than 100, which is applied in an amount of 100 to 400 g per litre of honeycomb structure volume.

4. Process according to Claims 2 and 3,
characterised in that
the coating of hydrocarbon adsorber also contains additional proportions of a conventional catalytically active coating of high surface area support oxides and catalytically active metal components from the group of platinum metals applied thereto, containing lattice-stabilised or pure aluminium oxide from the transition series, doped or pure cerium oxide and doped or pure zirconium oxide and that zeolite adsorber and high surface area support oxides in the coating are present in a ratio by weight of 4:1 to 1:2 and the catalytically active metal components are finely distributed on the carrier oxides, but not on the zeolite adsorber.

5. Process according to Claims 2 and 3,
characterised in that
the monolithic support structure for the hydrocarbon adsorber has a catalytically active coating of high surface area support oxides and catalytically active metal components from the group of platinum metals applied thereto and that a further coating of a hydrocarbon adsorber according to Claim 2 is applied to this coating, wherein for both coatings an amount of coating of 50 to 200 g per litre of support structure volume is used.

6. Process according to Claims 2 to 5,
characterised in that
the monolithic support structures for the hydrocarbon adsorber and three-way catalytic converter are ceramic monoliths of cordierite or mullite.

7. Process according to one of Claims 2 to 5,
characterised in that
the monolithic support structure for the hydrocarbon adsorber is a ceramic monolith and the support structure for the three-way catalytic converter is a heatable metal monolith.

## Revendications

1. Procédé d'épuration catalytique de gaz d'échappement d'automobiles avec élimination améliorée des hydrocarbures pendant la phase de démarrage à froid en utilisant un catalyseur à trois voies connu en soi et un adsorbant d'hydrocarbures placé dans le courant de gaz d'échappement en avant de ce catalyseur, catalyseur et adsorbant ayant une capacité thermique spécifique rapportée au volume,
caractérisé en ce que
la capacité thermique spécifique du catalyseur à trois voies comporte une valeur comprise entre 0,29 J/Kcm³ et la capacité thermique spécifique de l'adsorbant d'hydrocarbures est environ d'un facteur 1,1 à 3,0 plus grand que la capacité thermique spécifique du catalyseur.

2. Procédé selon la revendication 1,
caractérisé en ce qu'
il s'agit pour l'adsorbant d'hydrocarbures et la catalyseur à trois voies d'un corps support monolithique en forme de nid d'abeilles, sur lesquels sont appliqués des enduits adsorbants des hydrocarbures ou catalytiquement actifs d'une manière connue en soi.

3. Procédé selon la revendication 2,
caractérisé en ce qu'
il s'agit dans le cas de l'adsorbant d'hydrocarbures d'une zéolite Y désaluminisée stable à la température avec un rapport Si/Al supérieur à 50, de préférence supérieur à 100, qui est appliquée en une quantité de 100 à 400 g par litre de volume de corps en nid d'abeilles.

4. Procédé selon les revendications 2 et 3,
caractérisé en ce que
- l'enduction de l'adsorbant d'hydrocarbures comporte encore des parties additionnelles d'une enduction usuelle catalytique actif en oxydes porteurs hautement superficiel et par dessus des composants métalliques appliqués catalytiquement actifs du groupe des métaux du platine, contenant de l'oxyde d'aluminium de réseau stabilisé ou pur de la série de transition de l'oxyde de cérium dopé ou pur et de l'oxyde de zirconium dopé ou pur, et
- l'adsorbant de zéolite et les oxydes porteurs hautement superficiels se trouvent dans l'enduction dans un rapport pondéral de 4:1 à 1:2 l'un par rapport à l'autre et les composants métalliques catalytiquement actifs se présentent en fine dispersion sur les oxydes porteurs, toute-fois pas sur l'adsorbant de zéolite.

5. Procédé selon les revendications 2 et 3,
caractérisé en ce que
- le corps support monolithique pour l'adsorbant d'hydrocarbures comporte une enduction catalytiquement active en oxydes porteurs hautement superficiels et par dessus des composants métalliques appliqués catalytiquement actifs du groupe des métaux du platine, et
- sur cette enduction est appliqué une autre enduction en un adsorbant d'hydrocarbures selon la revendication 2, en utilisant pour les deux revêtements une quantité d'enduction de 50 à 200 g par litre de volume de corps de support.

6. Procédé selon une des revendications 2 à 5,
caractérisé en ce qu'
il s'agit pour les corps support monolithiques de l'absorbant d'hydrocarbures et du catalyseur à trois voies de monolithes de céramique en cordiérite ou mullite

7. Procédé selon une des revendications 2 à 5,
caractérisé en ce qu'
il s'agit pour le corps support monolithique de l'adsorbant d'hydrocarbures d'un monolithe en céramique et pour le corps support du catalyseur à trois voies d'un monolithe métallique chauffable.
